# EUROPEAN PATENT APPLICATION

(11) **EP 0 534 634 A1**
(43) Date of publication of application: **31.03.1993**
(21) Application number: 92308149.1
(22) Date of filing: 09.09.1992
(51) Int. Cl.: B41M 5/00, B41M 1/36

(54) **Method and compositions for producing stable, water-fast printed images**

(30) Priority: 23.09.1991 US 764024
(71) Applicant: Hewlett-Packard Company, Palo Alto, California 94304 (US)
(72) Inventor: Radke, Garold E., Corvallis, OR 97333 (US); Shields, James P., Corvallis, OR 97330 (US)
(74) Representative: Colgan, Stephen James

(57) **Abstract**

An improved system for producing stable, water-fast, and color bleed-resistant printed images. The system involves two main components. The first component consists of an ink composition having at least one dye material which includes at least one carboxyl group. The second component involves a salt solution containing at least one unbound multivalent (e.g. divalent) metal cation (e.g. Ca⁺⁺, Cu⁺⁺, Ni⁺⁺, Mg⁺⁺, Zn⁺⁺, and Ba⁺⁺). Other cations (e.g. Al⁺⁺⁺, Fe⁺⁺⁺, and Cr⁺⁺⁺) may also be used. Exemplary anions coupled with these cations may include Cl⁻, NO₃⁻, I⁻, Br⁻, ClO₃⁻,and CH₃COO⁻. The solution will have a preferred salt concentration level of about 5 - 40% by weight. The solution is then applied to a substrate in a variety of ways including application using thermal inkjet technology. Thereafter or simultaneously therewith, the ink composition is applied to the substrate. As a result, stable, water-fast images are produced.

## Description

### Background of the Invention

The present invention generally relates to printing technology, and more specifically to the production of stable, water-fast, and color bleed-resistant printed images using thermal inkjet technology.

Substantial developments have been made in the field of electronic printing technology. Specifically, a wide variety of highly efficient printing systems currently exist which are capable of dispensing ink in a rapid and accurate manner. Thermal inkjet systems are especially popular in this regard. Cartridges used in thermal inkjet systems basically include an ink reservoir in fluid communication with a substrate having a plurality of resistors thereon. Selective activation of the resistors causes thermal excitation of the ink and expulsion thereof from the ink cartridge. Representative thermal inkjet systems/cartridges are discussed in U.S. Patent No. 4,500,895 to Buck et al.; No. 4,513,298 to Scheu; No. 4,794,409 to Cowger, et al.; the Hewlett-Packard Journal, Vol. 36, No. 5 (May 1985); and the Hewlett-Packard Journal, Vol. 39, No. 4 (August 1988), all of which are incorporated herein by reference.

Notwithstanding the existence of advanced printing systems, additional research has also been conducted in order to enable these systems to produce clear and stable printed images of consistently high quality. For example, it is important for the printed images to be "water-fast". The term "water-fast" as used herein shall signify a printed image which does not smear, bleed, run, or the like when exposed to moisture (e.g. water and water-based compositions).

In addition, it is important for printed images to avoid problems associated with "color bleeding". The term "color bleeding" as used herein involves a situation wherein ink compositions having multiple color-producing agents experience the diffusion or migration of one color-producing agent into another color-producing agent. As a result, the border between adjacent colored regions in the printed image is ragged, ill-defined, and indistinct.

Furthermore, it is important that image quality remains consistent and stable with respect to a variety of different paper substrates. This characteristic is known as "print quality media independence". Print quality media independence is achieved by (1) preventing the feathering or wicking of ink along and through the fibers of the paper substrate being used, and (2) preventing the spreading of ink droplets on the paper surface.

Accordingly, a need remains for a printing system using thermal inkjet technology which produces water-fast, stable images that are not subject to problems caused by color bleeding and the like. The present invention satisfies this need in a unique manner as described herein below.

### Summary of the Invention

It is an object of the present invention to provide an improved printing system which is especially suitable for use with thermal inkjet technology.

It is another object of the invention to provide an improved printing system which produces images that are water-fast upon exposure to moisture after printing.

It is further object of the invention to provide an improved printing system which produces images that are not subject to color bleeding and the problems associated therewith.

It is a further object of the invention to provide an improved printing system which produces stable printed images regardless of the type/quality of substrate or print media (e.g. paper) being used.

It is a still further object of the invention to provide an improved printing system which uses materials that are easily formulated using readily available chemical components.

In accordance with the foregoing objects, the present invention involves an improved printing system for producing stable, color bleed-resistant, and water-fast printed images. The system is especially compatible with thermal inkjet technology and basically involves two main components. The first component consists of an ink composition having at least one coloring agent (e.g. dye material) which has at least one and preferably multiple carboxyl groups thereon. The coloring agent may consist of an organic dye composition having one or more carboxyl groups, or colorant/pigment dispersions known in the art which are made using carboxylated dispersants. Specific examples of these materials will be described herein below.

The second component involves a stabilizing salt solution which basically consists of at least one unbound multivalent metal cation. Exemplary and preferred materials suitable for this purpose may include but are not limited to salt solutions containing the following multivalent (e.g. divalent) metal cations: Ca⁺⁺, Cu⁺⁺, Ni⁺⁺, Mg⁺⁺, Zn⁺⁺, and Ba⁺⁺. In addition, Al⁺⁺⁺, Fe⁺⁺⁺, and Cr⁺⁺⁺ may also be used. Exemplary and preferred anions coupled with these cations may include but are not limited to Cl⁻, NO₃⁻, I⁻, Br⁻, ClO₃⁻, and CH₃COO⁻. Effective solutions containing multivalent metal cations as described herein preferably have a salt concentration level of about 0.3 - 65% by weight (about 5 - 40% by weight = optimum). The resulting solution is then applied to a substrate (e.g. paper) in a variety of ways including but not limited to: (1) application using thermal inkjet delivery systems known in the art; (2) application of an atomized mist to the substrate; and/or (3) application of the stabilizing salt solution to the substrate using a mechanical roller mechanism having the salt solution thereon. Likewise, other comparable application methods may be used.

In order to achieve maximum effectiveness, the stabilizing salt solution of the invention should be applied so that there is about 0.04 - 8.0 mg of salt per square inch of substrate after application (about 0.5 - 6 mg = optimum). This is accomplished through the application of about 0.006 - 0.02 ml of salt solution (about 0.01 - 0.015 ml = optimum) to the substrate per square inch thereof (using one of the foregoing application methods).

The multivalent metal cations in the stabilizing salt solution interact/bind with carboxyl groups on the coloring agent (e.g. dye), resulting in a chemical complex which is substantially insoluble. As a result, stable, water-fast, and color bleed-resistant images are produced in a highly efficient manner. In addition, the formation of the foregoing complex occurs nearly instantaneously, thereby separating colored ink components from colorless materials therein. This prevents the colored materials from diffusing along the fibers of paper substrates and spreading over the paper surface, thereby resulting in sharp printed images regardless of the type of paper being used. Thus, the present invention represents an advance in the art of printing technology, as described in greater detail below.

These and other objects, features, and advantages of the invention will be described below in the following Brief Description of the Drawings and Detailed Description of Preferred Embodiments.

### Brief Description of the Drawings

Illustrative and presently preferred embodiments of the invention are illustrated in the following drawing figures:
Fig. 1 is a schematic illustration of a specific method and system used to apply the stabilizing salt solutions and ink compositions of the present invention to a substrate.
Fig. 2 is a schematic illustration of an alternative application method and system.
Fig. 3 is a schematic illustration of an additional alternative application method and system.
Fig. 4 is a schematic illustration of a further alternative application method and system.
Fig. 5 is a schematic illustration of a still further alternative application method and system.
Fig. 6 is a schematic illustration of an even further alternative application method and system.

### Detailed Description of Preferred Embodiments

The present invention involves an improved printing system which is capable of producing stable, color bleed-resistant, and water-fast images. Likewise, the printing system as described herein is especially suitable for implementation using thermal inkjet technology.

The printing system of the invention basically involves two major components which cooperate to produce stable, color bleed-resistant, and water-fast images. The first component consists of an ink composition which includes at least one and preferably multiple chemical dye materials, each dye having at least one carboxyl group thereon. However, in a preferred embodiment, each dye will have a plurality of carboxyl groups. Exemplary carboxylated dye materials suitable for use in the present invention are listed in U.S. Patent 4,963,189 to Hindagolla which is incorporated herein by reference. Such materials involve the following basic structure: 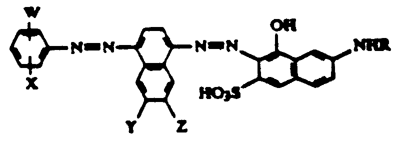
- [W: = COOH
- X: = H, or COOH
- Y: = H, COOH, or SO₃H
- Z: = H, COOH, or SO₃H
- R: = H, CH₂COOH, or CH₂CH₂COOH]
In this structure, it is preferred that there be at least two COOH groups, and that the number of COOH groups be equal to or greater than the number of SO₃H groups. Specific and exemplary dye structures are provided in Table I below:

**TABLE I**

| Dye # | X | W | Y | Z | R |
|---|---|---|---|---|---|
| 1 | 3-COOH | 5-COOH | H | H | H |
| 2 | 3-COOH | 5-COOH | COOH | H | H |
| 3 | 3-COOH | 5-COOH | H | COOH | H |
| 4 | 3-COOH | 5-COOH | H | SO₃H | H |
| 5 | 3-COOH | 5-COOH | SO₃H | H | H |
| 6 | H | 4-COOH | H | COOH | H |
| 7 | 3-COOH | 4-COOH | H | H | CH₂COOH |
| 8 | 2-COOH | 5-COOH | H | SO₃H | CH₂COOH |
| 9 | 3-COOH | 5-COOH | SO₃H | H | CH₂COOH |
| 10 | 3-COOH | 5-COOH | H | H | CH₂CH₂COOH |
| 11 | 3-COOH | 5-COOH | H | COOH | CH₂COOH |

Additional carboxylated dye materials suitable for use in the present invention are described in the Color Index, Vol. 4, 3rd ed., published by The Society of Dyers and Colourists, Yorkshire, England (1971), which is incorporated herein by reference. Exemplary dye materials listed in the Color Index which are suitable for use herein include the acid forms of the following dyes listed on pages 4336 and 4341 as follows: C.I. Direct Brown 13, C.I. Direct Brown 14, C.I. Dull Brown 215, C.I. Mordant Brown 36, C.I. Direct Black 122, and C.I. Direct Brown 74.

In addition, the terms "dye", "dye materials" or "chemical dyes" as used herein shall also include carboxylated dispersions known in the art. Carboxylated dispersions basically involve a water insoluble colorant (e.g. a pigment) which is rendered soluble through association with a dispersant which contains carboxylate solubilizing groups (e.g. an acrylic dispersant). Colorant materials used to produce the foregoing carboxylated dispersions normally consist of inorganic and organic dye compositions known in the art, examples of which include but are not limited to C.I. Pigment Black 7, C.I. Pigment Blue 15, C.I. Pigment Red 2, and C.I. Disperse Red 17 as listed in the Color Index, supra. The pigment materials are combined with dispersants having at least one and preferably multiple carboxyl groups which basically consist of acrylic monomers and polymers known in the art. Exemplary dispersants include but are not limited to a product sold by the BASF Company of North Carolina, USA, under the trademark HY FAST AUXILIARY.

It should again be noted that ink compositions suitable for use in accordance with the present invention shall not be limited to use of the above materials. Other materials known in the art having the characteristics set forth herein may also be used with equal effectiveness. In a preferred embodiment, the completed ink composition shall include about 0.5 - 5.0% by weight dye (about 2.0% = optimum).

Next, the selected dye is combined with one or more solvent materials. A wide variety of different solvents may be used as described in U.S. Patent 4,936,189, although it is preferred that a dual solvent system be employed. For example, a first solvent preferably consisting of water is combined with a second solvent which is organic in character. Representative organic solvents suitable for this purpose include but are not limited to 2-pyrillidone, ethylene glycol, diethylene glycol, triethylene glycol, tetraethylene glycol, and the like. In a preferred embodiment, the completed ink composition will include about 60 - 93% by weight first solvent (about 90% = optimum), and about 0.0 - 10.0% by weight second solvent (about 8% = optimum). A dual solvent system as described above is preferably used because the selected dye must remain soluble in the second solvent after all of the first solvent has evaporated. This prevents dye crusts (e.g. dried dye materials) from forming and blocking the operation of the printhead when it is in a "stand-by" or non-operational mode. Thus, the dual solvent system facilitates printer operation and prevents system malfunctions due to the formation of dye crusts. While a dual solvent system is useful and preferred, it is not required. In an alternative embodiment, only a single solvent (e.g. water) may be used. This type of solvent system is useful in connection with printing units which operate in a substantially continuous manner with a minimal (or non-existent) amount of "stand-by" time. In this environment, dye crust formation is not a significant problem in view of the negligible amount of time in which the printing system is non-operational. In any event, the combined total amount of solvent to be used in the ink composition of the invention (including both solvents if a dual solvent system is used) should be about 60 - 99% by weight of the ink composition (about 97% = optimum).

An optional biocide known in the art may also be added to the dye and solvent in order to prevent any microbial growth in the final ink composition. An exemplary biocide for this purpose would include a proprietary product sold under name PROXEL™ by Imperial Chemical Industries of Manchester, England. In a preferred embodiment, if a biocide is used, the final ink composition will include about 0.0001 - 0.10% by weight biocide (about 0.01% by weight = optimum).

In summary, an exemplary ink composition produced in accordance with the invention is described below in Table II:

**TABLE II**

| Component | Wt. % |
|---|---|
| Dye (selected from Table I above) | 2.0 |
| First solvent (H₂O) | 93.0 |
| Second solvent (2-pyrillidone) | 4.99 |
| Biocide | 0.01 |
| | 100.0 % |

Again, the present invention shall not be limited to the composition listed above in Table II. Other formulations within the parameters expressed herein will also function efficiently.

The resulting ink composition is non-toxic, and will preferably have a viscosity of about 1 - 10 cps (about 1.1 = preferred) and a surface tension of about 27 - 72 dynes/cm. Special reaction conditions are not required during the ink formulation process which may take place at room temperature (e.g. about 70 degrees F). It should also be noted that formulations of the above ink composition as described herein may optionally include additional additives (e.g. preservatives, anti-decomposition agents, cleaning agents, and the like).

The foregoing ink composition is readily dispensed using a wide variety of conventional printing systems. For example, the ink composition is especially suitable for use in thermal inkjet printing systems. Representative thermal inkjet printing systems are described in U.S. Patent No. 4,500,895 to Buck et al.; No. 4,513,298 to Scheu; No. 4,794,409 to Cowger, et al., the Hewlett-Packard Journal, Vol. 36, No. 5 (May 1985); and the Hewlett-Packard Journal, Vol. 39, No. 4 (August 1988), all of which are incorporated herein by reference as noted above. However, the present invention shall not be limited to only the systems described in these patents. To use the ink compositions in a thermal inkjet system, they are loaded into cartridges or the like which are inserted into conventional printing hardware, followed by activation of the printing system. The ink is then expelled and delivered (applied) onto a substrate (e.g. manufactured out of paper, plastic, or the like).

While the ink compositions described above are capable of producing clear images of relatively substantial stability, color bleeding and water-fastness problems may occur under certain circumstances, depending on the printing substrate/media being used. For example, highly absorbent, fibrous paper materials will often cause wicking of the ink, thereby producing indistinct images, color bleeding, and a lack of water-fastness. The present invention as described herein prevents these problems from occurring, regardless of the substrate which is used.

To control the foregoing problems, the second component of the two-component system described herein is used. This material consists of a stabilizing salt solution containing at least one multivalent metal cation (e.g. a metal cation with an oxidation state of 2 or greater). Exemplary multivalent metal cations which will function effectively in the present invention include but are not limited to the following divalent cations: Ca⁺⁺, Cu⁺⁺, Ni⁺⁺, Mg⁺⁺, Zn⁺⁺, and Ba⁺⁺. In addition, other multivalent metal cations may be used, and the above list is not meant to be exhaustive. For example, Al⁺⁺⁺, Fe⁺⁺⁺, and Cr⁺⁺⁺ may be used. Exemplary and preferred anions coupled with the multivalent metal cations in the system of the present invention may include but are not limited to Cl⁻, NO₃⁻, I⁻, Br⁻, ClO₃⁻, and CH₃COO⁻. Again, this list is not meant to be exhaustive, as other compatible anions may also be used. Salt solutions containing multivalent metal cations as described herein may be prepared by dissolving a given solid salt in water. Exemplary salts using the above anions and cations would include but not be limited to CaCl₂, Ca(NO₃)₂, CaI₂, CaBr₂, Ca(ClO₃)₂, Ca(C₂H₃O₂)₂, CuCl₂, Cu(NO₃)₂, CuBr₂, Cu(ClO₃)₂, Cu(C₂H₃O₂)₂, NiCl₂, Ni(NO₃)₂, NiI₂, NiBr₂, Ni(C₂H₃O₂)₂, MgCl₂, Mg(NO₃)₂, MgI₂, MgBr₂, Mg(ClO₃)₂, Mg(C₂H₃O₂)₂, ZnCl₂, Zn(NO₃)₂, ZnI₂, ZnBr₂, Zn(ClO₃)₂, Zn(C₂H₃O₂)₂, BaCl₂, BaI₂, BaBr₂, Ba(ClO₃)₂, Ba(C₂H₃O₂)₂, Al(NO₃)₃, Cr(NO₃)₃, Cr(C₂H₃O₂)₃, FeCl₃, Fe(NO₃)₃, FeI₃, and FeBr₃. Again, other salts may be used which are functionally compatible with carboxylated dyes, and the above list is not meant to be exhaustive. In a preferred embodiment, the salt concentration level of the stabilizing solutions as described herein should be about 0.3 - 65% by weight (about 5 - 40% = optimum). Salt concentration levels as used herein (e.g. % by weight) are defined in accordance with conventional, known chemical practices. By way of example, to prepare a 10% by weight CaCl₂ stabilizing salt solution, 10 g of dry CaCl₂ would be added to 90 g of water.

Furthermore, the stabilizing salt solutions of the present invention may also include an optional penetrant known in the art which decreases drying time. Exemplary and preferred penetrants include but are not limited to butyl carbitol, butyl cellusolve, pentanol, and butanol. If used, it is preferred that the penetrant be added to the stabilizing salt solutions so that said solutions comprise about 1-10% by weight penetrant.

In use, metal cations in the stabilizing salt solutions as described above bind/complex with carboxyl groups on the dye materials in the ink so that color bleeding and water-fastness problems may be controlled. Specifically, an insoluble dye complex is formed which is prevented from spreading, wicking, or otherwise diffusing beyond the initial ink droplet boundaries. Again, this results in a printed image which does not exhibit color bleeding problems, is water-fast, and ensures consistent print quality regardless of the type of substrate (e.g. paper) which is used.

The foregoing complexation reaction occurs in a highly and unexpectedly efficient manner with respect to salt solutions containing divalent metal cations in particular. While not completely understood, the binding/complexation reaction between multivalent (e.g. divalent) metal cations and carboxyl groups of dye molecules is schematically illustrated below. In the following example, M⁺⁺ is a divalent metal cation in solution of the type described herein (e.g. Ca⁺⁺ and the like) which is combined with a dye having two functional carboxyl groups. 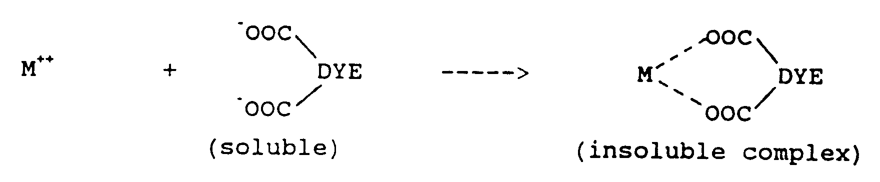
Basically, the stabilizing salt solutions of the invention are applied to a selected substrate (e.g. paper) using a number of methods as described below. Once the solutions are applied, they dry very rapidly leaving recrystallized salt compounds bound to the substrate. If a fibrous substrate is used (e.g. paper), some of the recrystallized salt compounds may also be bound within the fibrous matrix of the substrate. In a preferred embodiment, the present invention is most effective when the substrate (after salt solution application) includes about 0.04 - 8 mg of recrystallized salt per square inch of substrate (about 0.5 - 6 mg = optimum). This is typically accomplished by applying about 0.006 - 0.02 ml of salt solution to the substrate per square inch thereof (about 0.01 - 0.015 ml = optimum). The 0.01 - 0.015 ml range is used and preferred in situations where salt solutions having the foregoing salt concentration range of about 5 - 40% are employed.

After application and drying of the salt solutions, the substrate will have recrystallized salts thereon or impregnated therein as noted above. When liquid ink materials are subsequently applied to the substrate (e.g. using thermal inkjet technology), the liquid inks cause re-solvation of the salts, producing free cations and anions. The cations associated with the substrate are then free to interact with carboxyl groups on the dye molecules, forming dye complexes. These materials are substantially insoluble, and are bound to the substrate, thereby producing stable and water-fast printed images in a highly efficient manner. Furthermore, such images are produced regardless of the character, quality, and absorbance characteristics of the substrate being used.

Delivery of the stabilizing salt solutions should be done in a uniform manner so that all of the ink-receiving regions of the substrate are covered. A number of different methods may be used to apply the salt solutions to substrate materials. As such, the present invention shall not be limited to the use of any single application method. Some exemplary application methods are as follows:

### Example 1

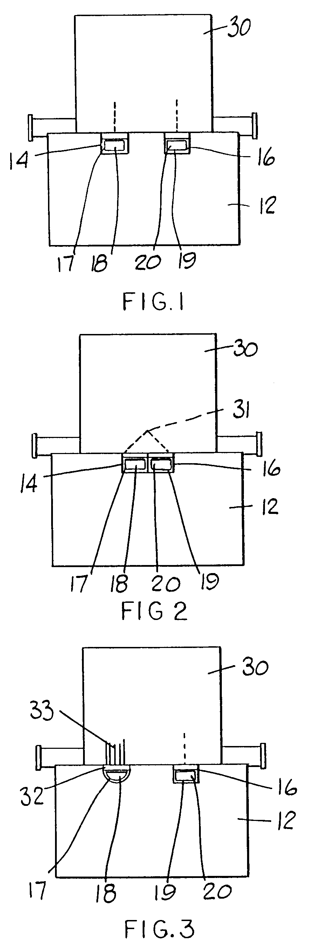

As shown in Fig. 1, an exemplary thermal inkjet printing system 12 is schematically illustrated. Except as indicated below, such a system and the cartridges used therein are known in the art and may be of the type described in U.S. Patent No. 4,500,895 to Buck et al.; No. 4,513,298 to Scheu; No. 4,794,409 to Cowger, et al.; the Hewlett-Packard Journal, Vol. 36, No. 5 (May 1985); and the Hewlett-Packard Journal, Vol. 39, No. 4 (August 1988), all of which are incorporated herein by reference as noted above. Accordingly, embodiments involving thermal inkjet systems as described herein shall not be limited to the use of any particular system.

The system 12 shown in Fig. 1 is modified to include two conventionally designed thermal inkjet cartridge units 14, 16, again of the type described in the forgoing references which have been incorporated herein by reference. Cartridge unit 14 would be positioned ahead of the cartridge unit 16 as illustrated and filled with a supply 17 of stabilizing salt solution 18, while cartridge unit 16 would be filled with a supply 19 of ink 20 having at least one carboxylated dye therein. The stabilizing salt solution 18 and the ink 20 are of the types described herein above. By way of specific example, a representative salt solution 18 would consist of a 10% solution of CaCl₂ dihydrate applied in an amount equal to about 0.013 ml per square inch of substrate. A representative ink 20 would consist of the composition shown in Table II above using dye number 2 from Table I. However, the invention shall not be limited to only the use of these materials.

In operation, cartridge unit 14 would apply a thin layer of stabilizing salt solution 18 to a substrate 30 made of paper so that the region upon which printing will occur would be coated with the solution 18. The precise and exact pattern of delivery with respect to the stabilizing salt solution 18 is selectively variable by properly controlling the thermal inkjet printing system 12.

Immediately after application of the stabilizing salt solution 18, the cartridge unit 16 is activated to conventionally apply the ink 20 onto the treated substrate 30. It should be noted that the stabilizing salt solution 18 dries rapidly or even faster if an optional penetrant is used as described above, thereby allowing both cartridge units 14, 16 to operate in a rapid, nearly simultaneous manner. The application of stabilizing salt solution 18, followed by the immediate application of ink 20 results in a printed image which is stable, color bleed-resistant, and water-fast.

### Example 2

This Example involves the same inks, salt solutions, and materials described in Example 1, but is slightly modified so that the cartridge units 14, 16 would operate simultaneously (Fig. 2). This would enable the stabilizing salt solution 18 and the ink 20 to mix "in flight" (e.g. during delivery) as schematically illustrated in Fig. 2 at reference number 31. As a result, the complexation/binding reaction described herein would occur prior to delivery of the foregoing components onto the substrate 30.

### Example 3

In this Example, cartridge unit 14 in the thermal inkjet system 12 would be replaced with an air spray atomizer unit 32 (Fig. 3) known in the art which basically consists of a commercially available device which is conventionally known as an air brush or air knife. The other materials and components in this Example are the same as those in Example 1. The atomizer unit 32 would apply the stabilizing salt solution 18 in a mist 33 prior to delivery of the ink 20 by the cartridge unit 16.

### Example 4

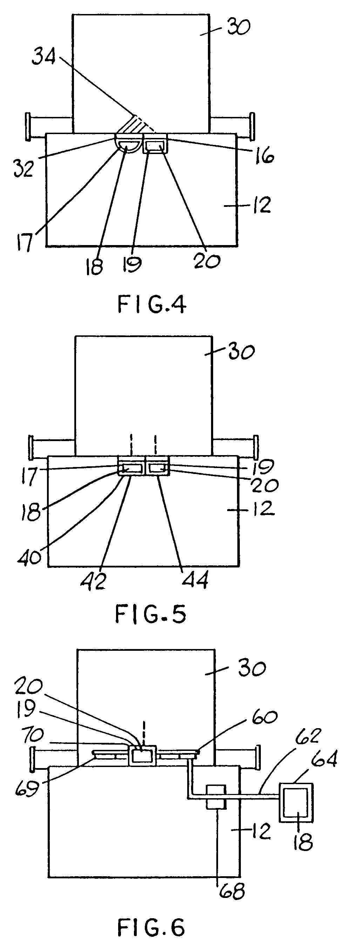

This Example (Fig. 4) would use the atomizer unit 32 and components/materials of Example 3, but would apply a mist containing the stabilizing salt solution 18 directly in the path of the ink 20 being ejected from the cartridge unit 16 with the mixture thereof being indicated at reference number 34 in Fig. 4. This would enable complexation/binding between the two components to occur prior to delivery onto the substrate 30.

### Example 5

In this Example (Fig. 5), the thermal inkjet printing system 12 is supplied with a cartridge 40 having multiple chambers 42, 44. This cartridge may be of the type illustrated and described in U.S. Patent No. 4,812,859 which is incorporated herein by reference. The chamber 42 is filled with a supply 17 of the stabilizing salt solution 18, while the chamber 44 is provided with a supply 19 of ink 20. The stabilizing salt solution 18 and the ink 20 (which may be of the types described in Example 1) are then delivered either sequentially (e.g. stabilizing salt solution 18 first as in Example 1 above) or simultaneously (as in Example 2 above) to the substrate 30. Again, this enables the production of high-quality, stable printed images.

### Example 6

Delivery of the stabilizing salt solution 18 in this Example (Fig. 6) is accomplished through the use of the thermal inkjet printing system 12 which is fitted with a roller mechanism 60 associated therewith. The roller mechanism 60 is operatively connected via conduit 62 to a supply 64 of the stabilizing salt solution 18. Delivery of the stabilizing salt solution 18 through the conduit 62 to the roller mechanism 60 from the supply 64 may be accomplished through the use of an in-line pump 68 of conventional construction and a distribution manifold 69. In use, the roller mechanism 60 is positioned adjacent and in contact with the substrate 30 and below a conventional cartridge 70 which contains a supply 19 of the ink 20. Again, the salt solution 18 and ink 20 may be of the type described above in Example 1. The pump 68 is then activated which enables delivery of the stabilizing salt solution 18 onto the roller mechanism 60 which contacts the substrate 30. As the substrate 30 moves through the thermal inkjet system 12, the roller mechanism 60 also moves, causing an even distribution of stabilizing salt solution 18 from the mechanism 60 onto the substrate 30. Ink 20 may then be applied to the substrate 30 from the cartridge 70 which is positioned above the roller mechanism 60 so that the ink 20 will be applied to treated portions of the substrate 30.

Notwithstanding the Examples listed above, it should be noted that the present invention shall not be limited to any single method for applying the stabilizing salt solutions of the invention to a substrate. Various other application methods of comparable design and efficiency may also be used for this purpose. Likewise, the process as described herein shall not be limited to the use of a thermal inkjet system only, which represents a preferred embodiment of the present invention. Other printing systems known in the art may also be used to implement the process described above.

The present invention involves a procedure which enables the production of stable, water-fast, and color bleed-resistant images from inks containing carboxylated dye materials. The process as described herein is efficient, rapid, and represents an advance in the art of electronic printing technology. Having described herein preferred embodiments of the present invention it is anticipated that suitable modifications may be made thereto by individuals skilled in the art within the scope of the invention. For example, a wide variety of different ink compositions containing carboxylated dye materials may be used, and a number of different application methods would be suitable for applying stabilizing salt solutions to substrates as previously indicated. Thus, the scope of the invention shall only be construed in accordance with the following claims:

## Claims

1. A method for producing stable, water-fast, and color bleed-resistant printed images on a substrate (30) comprising the steps of:
obtaining a supply (19) of an ink composition (20), said ink composition (20) comprising at least one chemical dye material having at least one carboxyl group thereon;
obtaining a supply (17) of a multivalent metal salt solution (18);
applying said salt solution (18) onto said substrate (30); and
applying said ink composition (20) onto said substrate (30) after said applying of said salt solution (18) thereon in order to produce said stable, water-fast, and color bleed-resistant printed images.

2. A method for producing stable, water-fast, and color bleed-resistant printed images on a substrate (30) comprising the steps of:
obtaining a supply (19) of an ink composition (20), said ink composition (20) comprising at least one chemical dye material having at least one carboxyl group thereon;
obtaining a supply (17) of a multivalent metal salt solution (18) comprising at least one multivalent metal cation selected from the group consisting of Ca⁺⁺, Cu⁺⁺, Ni⁺⁺, Mg⁺⁺, Zn⁺⁺, Ba⁺⁺, Al⁺⁺⁺, Fe⁺⁺⁺, and Cr⁺⁺⁺, said salt solution (18) having a salt concentration level of about 5 - 40% by weight;
applying said salt solution (18) onto said substrate (30); and
applying said ink composition (20) onto said substrate (30) after said applying of said salt solution (18) thereon in order to produce said stable, water-fast, and color bleed-resistant printed images.

3. The method of claim 1 wherein said salt solution (18) comprises at least one multivalent metal cation selected from the group consisting of Ca⁺⁺, Cu⁺⁺, Ni⁺⁺, Mg⁺⁺, Zn⁺⁺, Ba⁺⁺, Al⁺⁺⁺, Fe⁺⁺⁺, and Cr⁺⁺⁺.

4. The method of claims 1 or 2 wherein said obtaining of said salt solution (18) comprises the steps of:
providing a supply of a salt selected from the group consisting of CaCl₂, Ca(NO₃)₂, CaI₂, CaBr₂, Ca(ClO₃)₂, Ca(C₂H₃O₂)₂, CuCl₂, Cu(NO₃)₂, CuBr₂, Cu(ClO₃)₂, Cu(C₂H₃O₂)₂, NiCl₂, Ni(NO₃)₂, NiI₂, NiBr₂, Ni(C₂H₃O₂)₂, MgCl₂, Mg(NO₃)₂, MgI₂, MgBr₂, Mg(ClO₃)₂, Mg(C₂H₃O₂)₂, ZnCl₂, Zn(NO₃)₂, ZnI₂, ZnBr₂, Zn(ClO₃)₂, Zn(C₂H₃O₂)₂, BaCl₂, BaI₂, BaBr₂, Ba(ClO₃)₂, Ba(C₂H₃O₂)₂, Al(NO₃)₃, Cr(NO₃)₃, Cr(C₂H₃O₂)₃, FeCl₃, Fe(NO₃)₃, FeI₃, and FeBr₃; and
combining said salt with water in order to produce said salt solution (18).

5. The method of claims 1 or 2 wherein said applying of said salt solution (18) onto said substrate (30) comprises the steps of:
providing a thermal inkjet printing apparatus (12);
loading said substrate (30) into said printing apparatus (12);
supplying said printing apparatus (12) with said salt solution (18); and
activating said printing apparatus (12) with said salt solution (18) therein in order to cause said printing apparatus (12) to deliver said salt solution (18) onto said substrate (30).

6. The method of claims 1 or 2 wherein said applying of said salt solution (18) onto said substrate (30) comprises the steps of:
providing a thermal inkjet printing apparatus (12) having at least one roller unit (60) operatively connected to said supply (64) of said salt solution (18);
loading said substrate (30) into said printing apparatus (12), said substrate (30) coming into contact with said roller unit (60);
delivering said salt solution (18) from said supply (64) thereof to said roller unit (60); and
activating said printing apparatus (12) so as to cause movement of said substrate (30) therethrough, said movement of said substrate (30) causing said roller unit (60) to roll against said substrate (30) and deliver said salt solution (18) from said roller unit (60) onto said substrate (30).

7. The method of claims 1 or 2 wherein said applying of said salt solution (18) onto said substrate (30) comprises the steps of:
providing a thermal inkjet printing apparatus (12), said printing apparatus (12) comprising a plurality of individual cartridge units (14, 16), at least one (14) of said cartridge units (14, 16) containing said salt solution (18), and at least one (16) of said cartridge units (14, 16) containing said ink composition (20);
loading said substrate (30) into said printing apparatus (12); and
activating said one (14) of said cartridge units (14, 16) containing said salt solution (18) in order to cause delivery of said salt solution (18) onto said substrate (30).

8. The method of claim 7 wherein said applying of said ink composition (20) onto said substrate (30) comprises the step of activating said one (16) of said cartridge units (14, 16) containing said ink composition (20) in order to cause delivery of said ink composition (20) onto said substrate (30).

9. The method of claims 1 or 2 wherein said applying of salt solution (18) onto said substrate (30) comprises the steps of:
providing a thermal inkjet printing apparatus (12), said apparatus (12) comprising a cartridge unit (40) having a plurality of chambers (42, 44) therein, at least one (42) of said chambers (42, 44) containing said salt solution (18), and at least one (44) of said chambers (42, 44) containing said ink composition (20);
loading said substrate (30) into said printing apparatus (12); and
activating said cartridge unit (40) so as to cause delivery of said salt solution (18) from said one (42) of said chambers (42, 44) containing said salt solution (18) onto said substrate (30).

10. The method of claim 9 wherein said applying of said ink composition (20) onto said substrate (30) comprises the step of delivering said ink composition (20) from said one (44) of said chambers (42, 44) containing said ink composition (20) onto said substrate (30).
